# EUROPEAN PATENT APPLICATION

(11) **EP 1 761 073 A1**
(43) Date of publication of application: **07.03.2007**
(21) Application number: 05300717.5
(22) Date of filing: 05.09.2005
(51) Int. Cl.: H04N 9/31

(54) **Color display and camera with a respective viewfinder display**

(71) Applicant: Thomson Licensing, 92100 Boulogne-Billancourt (FR)
(72) Inventor: van den Herik, Florus Bernardus, 4907 NR, Oosterhout (NL)
(74) Representative: Arnold, Klaus-Peter

(57) **Abstract**

The color display comprises a light source with at least the colors red, green and blue for providing a color picture display, and the display is further switchable into an operating mode in which the three colors of the light source are switched on at the same time for providing a monochrome picture display. The color display is for example a pixel based display converting a video signal into sub-fields in accordance with the colors red, green and blue as included in the video signal. For the color display mode, the light source provides the three colors red, green and blue alternatingly in a consecutive manner, and for the monochrome picture display mode, the three colors of the light source are switched on at the same time or are operated continuously.

## Description

### FIELD OF THE INVENTION

The present invention relates to a color display with a light source comprising a red, a green and a blue light, and to an application of the color display for a viewfinder of a portable television broadcast camera.

### BACKGROUND

For portable broadcast camera viewfinders, generally monochrome cathode ray tubes (CRT) are used. The light output and the resolution of such a viewfinder are high enough for providing optimal focusing for professional applications in accordance with the properties of these CRTs. However, it is a monochrome picture. For some applications, for example sport event broadcast recordings, a color picture may be wanted. Color CRTs with the dimensions of 1,5 or 2 inch are not available.

Some professional camera viewfinders use already a color display, for example by using transmissive LCD panels comprising a white back light and a color filter on the LCD panel itself. A disadvantage of such panel is that a screen door effect can be visible because of the relatively small aperture of the pixels. Also the resolution can be a problem because three pixels are necessary to emit a different color.

Some flat displays use LCOS or FLCOS reflective displays, which are usable also for professional camera viewfinders. Advantage of this type of display is the high aperture, made possible because the pixel driver electronics is under the pixel area itself. To generate a color picture, a color sequential system is used. By means of a light source, providing a red, green and blue light consecutively in time, a red, a green and a blue picture are reflected by the display, using a field rate at least three times higher than the field rate of the video input signal. Disadvantage of such a color display is that the light output decreases and a color break-up phenomenon occurs. This phenomenon can be reduced by using an even higher field rate or by means of other solutions discussed in technical publications, but the effect will still be visible at rapid movements of the eye.

### SUMMARY OF THE INVENTION

The color display comprises a light source with at least the colors red, green and blue for providing a color picture display, and the display is further switchable into an operating mode in which the three colors of the light source are switched on at the same time for providing a monochrome picture display. The color display is for example a pixel based display converting a video signal into sub-fields in accordance with the colors red, green and blue as included in the video signal. For the color display mode, the light source provides the three colors red, green and blue alternatingly in a consecutive manner, and for the monochrome picture display mode, the three colors of the light source are switched on at the same time or are operated continuously.

The light source may comprise at least three lamps for providing the red, green and blue light. For the color display mode, the three lamps are operated in a time-sequential manner in accordance with color sub-fields, into which a field or a frame of the video signal is divided, and for the monochrome picture display, the three lamps are switched on at the same time or are operated continuously. The monochrome picture display provides therefore a bright display because of the high light output of the lamps being switched on at the same time, the light output being about three times higher than when displaying a color picture. Further, the resolution is improved and no color artifacts like a color break up effect can occur.

The color display may be used in particular for an electronic viewfinder of a professional camera, having a size for example of 1,5 or 2 inch. The new viewfinder provides a high resolution monochrome picture with a high light output comparable with a cathode ray tube viewfinder, but in addition also a color display, to which can be switched instantly when wanted by a cameraman.

The new viewfinder may comprise a switching means, for example a button connected with a control circuit of the light source, for switching between the color display mode and the monochrome display mode. This allows a cameraman to switch instantly between the monochrome picture display mode and the color picture display mode in accordance with a given scene. A viewfinder of this kind can be arranged easily, because only the control circuit of the light source has to be modified, the processing of the video signal remains the same.

### BRIEF DESCRIPTION OF THE DRAWINGS

Preferred embodiments of the invention are now explained in more detail with regard to schematic drawings, which show:
- Figure 1:: picture sequences of sub-fields of a video signal for providing a color display, and
- Figure 2:: monochrome picture sequences of sub-fields of a video signal for providing a monochrome display.

### DETAILED DESCRIPTION OF PREFERRED EMBODIMENTS

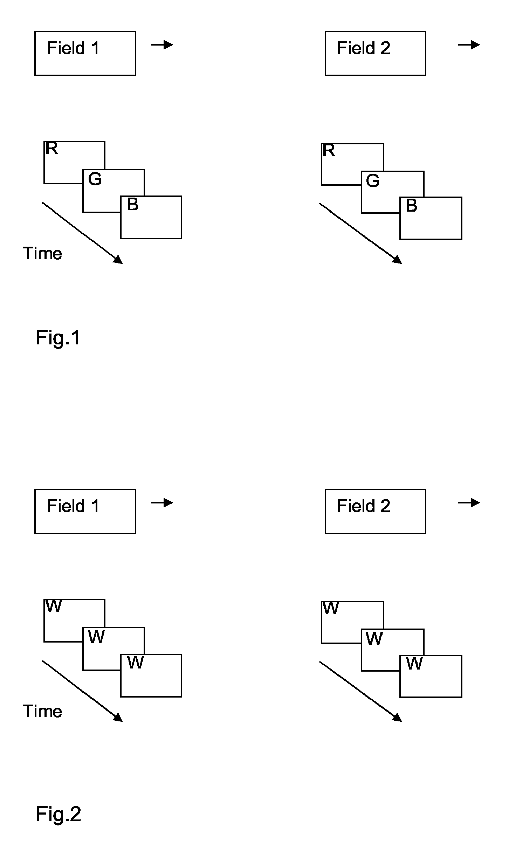

In figure 1 a sequence of fields comprising sub-fields R, G, B is shown, established from a video signal, for providing a color display of a respective video on a field-sequential color display. In a field-sequential color display, each field of a video signal is separated into at least three color-separated sub-fields R, G, B for the colors red, green and blue. By sequentially displaying these sub-fields on a screen fast enough, a full color image is perceived.

As shown in figure 1, the first field of a video signal, field 1, consists of a display of three consecutive sub-fields in time, red R, green G and blue B, the sub-fields providing a red, a green and a blue picture on a screen for establishing a color display. In the next step, a second field, field 2, is displayed, which comprises also a display of three consecutive sub-fields R, G and B for the colors red, green and blue. Field 1 and field 2 establish a frame of the video signal, and in the next step, field 1 of the next frame will be displayed.

As known, for a display of a CVBS video signal, for example a PAL signal, an interlaced display mode is used within a television set with two alternating fields of a frame for displaying the horizontal lines with the picture content on a display screen. Another display mode is the progressive display, which is processed in the same manner by a field-sequential color display as described before. For a progressive display, each frame is temporarily divided accordingly into color-separated sub-frames, as shown in figure 1.

A time-sequential display of sub-fields as described before is used in particular by reflective displays using a microdisplay like LCoS (Liquid Crystal on Silicon), FLCoS, or DLP. As known, a LCoS television display comprises a matrix of liquid crystals arranged on a silicon microchip, the microchip comprising in particular the driver electronics for the control of the liquid crystals. Each liquid crystal is used for providing a display of a pixel on a screen, the liquid crystals being controlled by means of the driver electronics in accordance with a respective video signal. All liquid crystals are operated at the same time for displaying a sub-field for establishing a pixel-based display in accordance with the number of liquid crystals.

For a color display, the LCoS microdisplay is illuminated by a light source, which provides a red, green and blue light consecutively in time, for reflecting a red, green and a blue picture depending on the color content of the video signal. A video signal comprises in particular R, G, B color components, which are used to provide respective time-sequential sub-fields as explained with regard to figure 1. On the screen, the time-sequential red, green and blue pictures add for visualizing a color display to the human eye.

The light source may comprise for example three respective color lamps or three white lamps with a color filter for providing a respective illumination of the microdisplay with red, green and blue light consecutively in time. Also solutions comprising a white lamp and a color wheel are known. As a further possibility, LEDs may be used for providing the respective colors. The illumination frequency with red, green and blue light for the microdisplay has to be at least three times higher than the field frequency of the video input signal.

However, it is known that reflective displays like LCoS have disadvantages like color artifacts, for example color breakup (CBU), where different sub-frame colors are observed separately, similar with a rainbow effect. CBU can occur both with stationary and moving images. For moving images, it is believed that the reason for CBU is considered to be caused by the temporal integration in the visual system. This phenomenon can be reduced by using an even higher field frequency or by means of other solutions discussed in technical publications, but the technical effort increases considerably and the effect may still be visible at rapid movements of the eye.

According to the invention, the color display is switchable to a monochrome display mode, by maintaining the color sequential system of the microdisplay, but switching on the red, green and blue light at the same time. In particular, the light source may be switched on with all the colors continuously. This provides a monochrome picture, or essentially a monochrome picture, which has no color break-up effects, and which has a bright display because of the high light output being about three times higher than when displaying a color picture.

As shown in figure 2, a field 1 is displayed by a microdisplay, the microdisplay being controlled in the same manner as explained with regard to figure 1, in which time-sequential sub-fields are used for displaying respective red, green and blue pictures. But now the three colors of the light source are switched on at the same time for the illumination of the microdisplay.

Therefore, the microdisplay reflects now in time three consecutive sub-fields W, which have each a monochrome content, resulting in a black-and-white picture, or essentially a black-and-white picture. For the field 2 of the figure 2, the microdisplay is illuminated by the light source in the same manner. Also the consecutive fields 3, 4, ...(not shown) provide sub-fields having each a monochrome content. The color display provides therefore in this operating mode a high-resolution monochrome picture with a high brightness without any irritating color artifacts.

A color display of this kind can be arranged very easily, because the microdisplay and the respective video signal processing circuits and driver circuits for operating the microdisplay have not to be changed. Only the control of the light source has to be modified. For example, light source may comprise three lamps for providing a red, a green and a blue light, and which are switched on always at the same time for this operating mode, or which are operated continuously. The color display comprises therefore two operating modes, a color and a monochrome display, between which can be switched easily by changing the control of the light source.

For switching between monochrome and color mode, the color display may comprise a switching means, for example a button connected with the control circuit of the light source, for allowing a user to switch instantly between the two modes. The color display may be used in particular for a viewfinder of a professional video or television camera. A cameraman can select then easily between the monochrome or the color mode for the viewfinder, for providing an optimized viewfinder display in accordance with a scene, which has to be recorded.

The present invention is not limited to the embodiments as described with regard to the figures, and various available modifications come possible for those skilled in the art without departing from the scope of the present invention. In particular, instead of a LcoS microdisplay, also other reflective microdisplays like FLCoS or DLP may be used. Also a LCD display may be used, when a backlight is applied, which operates with a light source providing the three colors red, green and blue in a consecutive manner.

## Claims

1. Color display comprising a light source providing three colors red, green and blue, **characterized in that** the display is switchable into an operating mode in which the three colors are switched on at the same time for a monochrome picture display.

2. Color display according to claim 1, wherein the light source comprises at least three lamps for providing a red, a green and a blue light, the three lamps being switched on at the same time or being operated continuously for providing the monochrome picture display.

3. Color display according to claim 1 or 2, wherein the color display comprises a switching means, for example a button connected with a control circuit of the light source, for switching between a color display mode and a monochrome display mode.

4. Color display according to claim 1, 2 or 3, wherein the color display is a LCD display or a reflective display like LCoS or FLCoS.

5. Color display according to claim 4, wherein the color display comprises a light source with red, green and blue LEDs for providing the red, green and blue colors.

6. Color display according to one of the preceding claims, wherein the color display is a pixel-based display converting a video signal into sub-fields (R, G, B, W) or sub-frames for providing the color or the monochrome display.

7. Camera having a viewfinder, which comprises a color display in accordance with one of the preceding claims.
